# EUROPEAN PATENT SPECIFICATION

(11) **EP 4 566 703 B1**
(45) Date of publication and mention of the grant of the patent: **01.04.2026**
(21) Application number: 24217667.5
(22) Date of filing: 05.12.2024
(51) Int. Cl.: B01J 4/00, B01J 8/00, B01J 8/02

(54) **MIXED GAS DISTRIBUTION SYSTEM AND AMMONIA SYNTHESIS SYSTEM COMPRISING MIXED GAS DISTRIBUTION SYSTEM**
MISCHGASVERTEILUNGSSYSTEM UND AMMONIAKSYNTHESESYSTEM MIT MISCHGASVERTEILUNGSSYSTEM
SYSTÈME DE DISTRIBUTION DE GAZ MIXTE ET SYSTÈME DE SYNTHÈSE D'AMMONIAC COMPRENANT UN SYSTÈME DE DISTRIBUTION DE GAZ MIXTE

(30) Priority: 06.12.2023 KR 20230175326
(43) Date of publication of application: 11.06.2025
(73) Proprietor: SK Innovation Co., Ltd., Seoul 03188 (KR)
(72) Inventor: LEE, Jun Young, Daejeon 34124 (KR); SONG, Da Eun, Daejeon 34124 (KR); IM, Ju Hwan, Daejeon 34124 (KR); JEONG, Jae Hun, Daejeon 34124 (KR); KIM, Sun Kug, Daejeon 34124 (KR); KIM, Ye Jin, Daejeon 34124 (KR)
(74) Representative: Prüfer & Partner mbB Patentanwälte · Rechtsanwälte

(56) References cited:
- WO-A1-2022/194513
- CN-U- 203 440 099
- US-A- 2 384 874
- US-A- 4 230 669

## Description

### TECHNICAL FIELD

The present disclosure relates generally to a mixed gas distribution system, in particular to an ammonia synthesis system comprising such mixed gas distribution system. The ammonia synthesis system of the present disclosure is particulalry suited for using a feed gas generated with energy from a renewable energy power source.

### BACKGROUND

There is an increasing need for renewable energy to achieve a greenhouse gas reduction to cope with climate change and depletion of oil resources. However, areas that meet an appropriate condition for renewable energy production are scattered, and it is thus essential to find means and ways for storing and transporting renewable energy. For example, renewable energy, which is abundant in the equatorial and southern hemisphere areas, is required to be transported to the northern hemisphere where renewable energy is highly demanded.

In addition, renewable energy has temporal variability, thus making an electric storage device essential. Ammonia is spotlighted as an energy carrier to solve the problems occurring from the area ubiquity and temporal variability of renewable energy. In particular, ammonia may be liquefied at room temperature and at pressures of 8.5 atmospheres or lower, and thus be stored and transported more easily than hydrogen. Therefore, as an alternative to solve the problems occurring from the area ubiquity and temporal variability of renewable energy, there is a need for synthesizing ammonia from hydrogen and nitrogen produced using electricity from renewable energy.

For example, hydrogen, one of the main raw material for the ammonia synthesis, may be produced by a water electrolyzer powered by renewable energy such as solar or wind energy. One issue that needs to be addressed is that renewable energy, such as, for example, solar energy or wind energy is not constant or available at all times. Therefore, the amount of hydrogen (e.g., flow rate) provided by a process using renewable solar or wind energy may vary or fluctuate significantly and, hence, an ammonia synthesis system using such hydrogen cannot be operated at a constant flow rate. Such changes may have a negative impact on the overall efficiency of the ammonia synthesis system.

In addition, a flow rate distribution upstream of a catalyst bed included in an ammonia synthesis reactor may get more and more less uniform when a flow rate of the raw material such as hydrogen fed into the ammonia synthesis system decreases or increases.

In addition, in a conventional ammonia synthesis system, a temperature deviation may occur between the central and outer parts of the catalyst bed especially at the beginning of its operation, which may reduce an ammonia synthesis yield. CN 203 440 099 U discloses a reactor with a gas distributor for ammonia synthesis with an annular catalyst bed configured for vertical flow. The distributor hangs inside the upper part of the gas distribution device above a lower part with a smaller diameter.

Therefore, there is a need for an ammonia synthesis system which can operate efficiently with hydrogen from a renewable energy process. The ammonia synthesis system will need to be able to cope with the changes in the flow rate that occurs during the production cycle, while solving the problems of the non-uniform flow rate distribution that occurs upstream of the catalyst bed and the reduced ammonia synthesis yield caused by the temperature deviation between the central and outer parts of the catalyst bed at the beginning of the operation.

Thus, there is a need for a mixed gas distribution system and an ammonia synthesis system which may solve these problems.

### SUMMARY

An embodiment of the present disclosure is directed to providing an ammonia synthesis system which may cope with significant changes in a raw material flow rate that occur during a production cycle.

Another embodiment of the present disclosure is directed to providing a mixed gas distribution system and an ammonia synthesis system which may maintain a uniform flow rate distribution before a catalyst bed included in an ammonia synthesis reactor even when a flow rate of a raw material, such as hydrogen, fed into the ammonia synthesis system is decreased.

An embodiment of the present disclosure is directed to providing a mixed gas distribution system and an ammonia synthesis system having excellent mixing efficiency of hydrogen and nitrogen, which are ammonia synthesis raw materials.

Another embodiment of the present disclosure is directed to providing an ammonia synthesis system which may improve an ammonia synthesis yield by enabling a temperature deviation between the central and outer parts of a catalyst bed to be uniform at the beginning of its operation.

Still another embodiment of the present disclosure is directed to providing an ammonia synthesis system which may improve an ammonia synthesis yield at the beginning of its operation by preheating a catalyst bed at the beginning of its operation.

Another embodiment of the present disclosure is directed to providing an ammonia synthesis system which may save energy by optimizing an amount of energy required by the system during its operation.

Another embodiment of the present disclosure is directed to providing an ammonia synthesis system which may increase a catalyst replacement cycle by uniformly using each catalyst bed during the operation.

In one embodiment, provided is a mixed gas distribution system comprising a gas distribution device; a mixed gas supply line connected to the gas distribution device; a flow induction guide; an upper area; and a plurality of mixed gas flow pipes fixed to a circumference part of a bottom surface of the upper area, and connected to a plurality of openings formed in the circumference part of the bottom surface to enable a movement of mixed gas, wherein the gas distribution device is installed horizontally, a plurality of mixed gas distribution openings are formed in an outer surface of the gas distribution device and distribute the mixed gas, the upper area has the bottom surface and a side surface connecting the bottom surface with an upper wall inside an ammonia synthesis reactor, a circular opening is formed in a center of the bottom surface of the upper area, the flow induction guide has a side surface connecting an upper circumference of an inner drum included in the reactor with a circumference of the circular opening formed in the center of the bottom surface of the upper area, a fixation bracket is disposed on an inner surface of the flow induction guide, and the gas distribution device is supported by the fixation bracket.

The mixed gas flow pipe may have a bottom surface and a side surface connecting the bottom surface with the opening formed in the circumference part of the bottom surface of the upper area, a plurality of upper openings may be formed in a side surface of an upper part of the mixed gas flow pipe spaced apart from each other along a circumference of the pipe, a plurality of middle openings may be formed in a side surface of a middle part of the mixed gas flow pipe spaced apart from each other along the circumference, and a plurality of lower openings may be formed in a side surface of a lower part of the mixed gas flow pipe spaced apart from each other along the circumference, and the mixed gas flow pipe may include a cover surrounding at least some regions of the side surface of the mixed gas flow pipe to provide a space for a fluid flowing out of the side surface of the mixed gas flow pipe after passing through the upper opening to be guided toward the middle opening.

The mixed gas flow pipe may further include a separator plate dividing the upper and middle parts of the mixed gas flow pipe from each other.

A preferable use of the above described mixed gas distribution system may be in a ammonia synthesis reactor.

The gas distribution device may have a toroidal shape.

The cooling mixed gas may be supplied from the mixed gas supply line.

A conical flow inducer may be disposed at a center of the upper wall inside the reactor.

The mixed gas supply lines may include a flow regulating device.

Further, a distribution plate may be installed horizontally above an upper surface of the inner drum. Preferably, the distribution plate includes a plurality of openings.

In another embodiment, provided is an ammonia synthesis system including the ammonia synthesis reactor; the mixed gas distribution system, which is included in the ammonia synthesis reactor; and one or more catalyst beds disposed downstream from the mixed gas distribution system.

In said ammonia synthesis system, a heat exchanger may be disposed downstream from the catalyst bed in order to remove heat from an effluent of the catalyst bed. Further or alternatively, the heat exchanger may surround the catalyst bed or its surroundings.

In a further aspect, a method for ammonia synthesis is provided wherein the ammonia synthesis system disclosed herein is used.

Ammonia may be synthesized in the ammonia synthesis system and in the method at 10 to 300 bar.

Ammonia may be synthesized in the ammonia synthesis system and in the method at 200 to 700°C.

In one embodiment, provided is an ammonia synthesis system comprising: an ammonia synthesis reactor; a mixed gas distribution system as mentioned above included in an ammonia synthesis reactor; an eco-friendly process for making the hydrogen using renewable energy and supplying the hydrogen to the mixed gas distribution system, and one or more catalyst beds disposed downstream from the mixed gas distribution system inside the ammonia synthesis reactor.

Other features and aspects will be apparent from the following detailed description, the drawings, and the claims.

### BRIEF DESCRIPTION OF THE DRAWINGS

FIG. 1 is a view showing a syngas distribution system and an ammonia synthesis system according to an embodiment of the present disclosure.
FIG. 2 is a view showing a syngas distribution system and an ammonia synthesis system according to another embodiment of the present disclosure.
FIG. 3 is a cross-sectional view showing a bottom surface of an upper area according to an embodiment of the present disclosure.
FIG. 4 is a perspective view showing a mixed gas flow pipe according to an embodiment of the present disclosure.
FIG. 5 is a perspective view showing the inside of the mixed gas flow pipe according to an embodiment of the present disclosure.
FIG. 6 is a perspective view showing the inside of a mixed gas flow pipe according to another embodiment of the present disclosure.

### DETAILED DESCRIPTION

Various advantages and features of the present disclosure and methods for accomplishing the same will become apparent to the skilled person of the art from the embodiments and examples described in detail below. However, it is noted that the present disclosure is not limited only to the embodiments and examples disclosed below, and may be implemented in various different forms. These embodiments and examples are provided only for making the present disclosure complete and for allowing those skilled in the art to fully appreciate the scope of the present disclosure as defined by the claims.

Unless defined otherwise, all terms (including technical and scientific terms) used in the specification have the same meanings as meanings commonly understood by those skilled in the art to which the present disclosure pertains.

Terms of a singular number used in the specification may be interpreted as including its plural number unless otherwise indicated.

A numerical range used in the specification may include the lower and upper limits and all values within that range, increments logically derived from the shape and width of the defined range, all values delimited by those limits, and all possible combinations of the upper and lower limits of a numerical range delimited by different shapes. The defined numerical range may also include values outside the numerical range, which may occur due to experimental errors or rounding of values unless otherwise specified in the specification.

A term "to include" or "to comprise" in the specification is a comprehensive description that has the meaning equivalent to an expression such as "to include", "to comprise", "to contain", "to have", or "to be featured", and does not exclude an element, a material, or a process that is not additionally enumerated.

The terms "upper", "middle" and "lower" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation.

Unless otherwise indicated, a unit of % used in the specification may indicate % by weight.

In the specification, "A to B" indicates "A or more and B or less" unless otherwise specifically defined.

An embodiment of the present disclosure may provide a mixed gas distribution system including a gas distribution device; a mixed gas supply line connected to the gas distribution device; a flow induction guide; an upper area; and a plurality of mixed gas flow pipes fixed to a circumference part of a bottom surface of the upper area, and connected to a plurality of openings formed in the circumference part of the bottom surface to enable a movement of mixed gas, wherein the gas distribution device is installed horizontally, a plurality of mixed gas distribution openings are formed in an outer surface of the gas distribution device and distribute the mixed gas, the upper area has the bottom surface and a side surface connecting the bottom surface with an upper wall inside an ammonia synthesis reactor, a circular opening is formed in the center of the bottom surface of the upper area, the flow induction guide has a side surface connecting an upper circumference of an inner drum included in the reactor with a circumference of the circular opening formed in the center of the bottom surface of the upper area, a fixation bracket is disposed on an inner surface of the flow induction guide, and the gas distribution device is supported by the fixation bracket.

The mixed gas distribution system and an ammonia synthesis system comprising the mixed gas distribution system according to an embodiment of the present disclosure may maintain a uniform flow rate distribution upstream of a catalyst bed included in the ammonia synthesis reactor even when a flow rate of a raw material, such as hydrogen, fed into the ammonia synthesis system is decreased.

In addition, the mixed gas distribution system and the ammonia synthesis system according to an embodiment of the present disclosure may achieve excellent mixing efficiency of hydrogen and nitrogen, which are the raw materials for synthesizing ammonia.

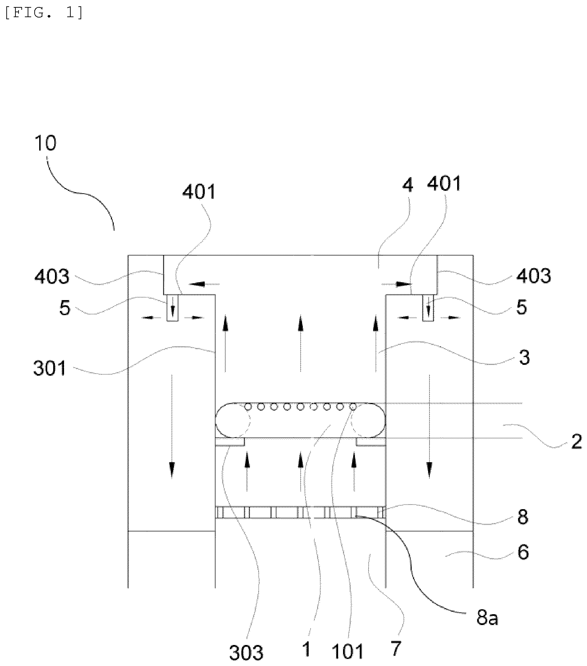

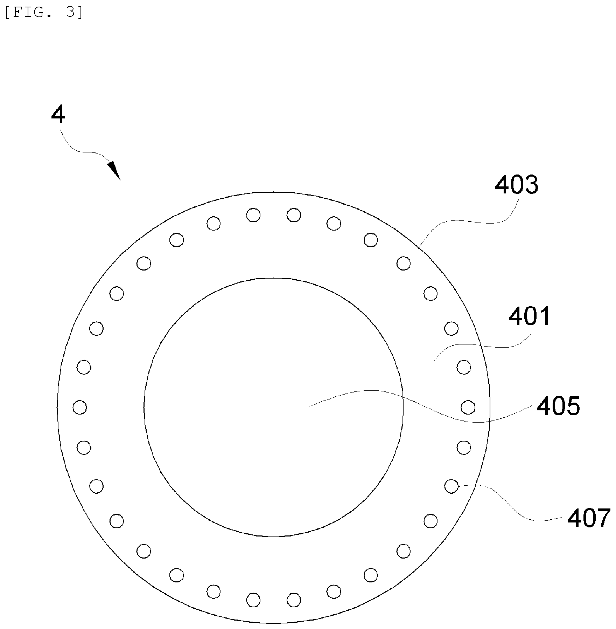

Referring to FIGS. 1 and 3, the mixed gas distribution system according to an embodiment of the present disclosure may include a gas distribution device 1; a mixed gas supply line 2 connected to the gas distribution device 1; a flow induction guide 3; an upper area 4; and a plurality of mixed gas flow pipes 5 fixed to a circumference part of a bottom surface 401 of the upper area 4, and connected to a plurality of openings 407 formed in the circumference part of the bottom surface 401 to enable the movement of the mixed gas. Each of the plurality of openings 407 may (optionally) correlate with the mixed gas flow pipe 5 located respectively below each opening 407 for gas flow.

The gas distribution device 1 may be installed horizontally, and a plurality of mixed gas distribution openings 101 for distributing the mixed gas may be formed in an outer surface of the gas distribution device 1. The mixed gas, supplied through the mixed gas supply line 2, may be distributed into the ammonia synthesis reactor through the mixed gas distribution openings 101. The gas distribution device 1 may uniformly mix the mixed gas flowing in from an inner drum 7 with the mixed gas supplied from the mixed gas supply line 2.

The mixed gas distribution openings 101 may distribute the mixed gas upward or downward, however, the embodiments are not be limited in this way. The mixed gas distribution openings are spaced apart from each other and may be arranged in any suitable pattern.

Referring to FIG. 3, the upper area 4 may have the bottom surface 401 and a side surface 403 connecting the bottom surface 401 with the upper wall inside the reactor, and a circular opening 405 may be formed in the center of the bottom surface 401 of the upper area 4. The mixed gas introduced from the inner drum 7 and the mixed gas supplied from the mixed gas supply line 2 may flow into the upper area 4 through the flow induction guide 3 and may then be directed toward the side surface of the upper area 4 and pass through the plurality of openings 407 to thus flow into the plurality of mixed gas flow pipes 5.

The flow induction guide 3 may have a side surface 301 connecting an upper circumference of the inner drum 7 included in the reactor with the circumference of the circular opening 405 formed in the center of the bottom surface 401 of the upper area 4. The flow induction guide 3 may include a fixation bracket 303 disposed on an inner surface of the flow induction guide 3 for supporting the gas distribution device 1. The mixed gas flowing in from the inner drum 7 and the mixed gas supplied from the mixed gas supply line 2 may flow into the upper area 4 along the flow induction guide 3.

The gas distribution device 1 may be supported by the fixation bracket 303. The fixation bracket 303 is configured to provide support for the gas distribution device creating a ring-shape support structure along the internal circumference of the flow induction guide 3. The ring shaped fixation bracket 303 may have a small width to leave most of the cross-sectional area of the flow induction guide 3 open for the mixed gas flow to pass through unobstructed and reach the mixed gas distribution device 1. The mixed gas flow may then flow through the mixed gas distribution openings 101 toward the upper area 4 of the mixed gas distribution system. The mixed gas may then pass through the plurality of openings 407 of the bottom surface 401 of the upper area 4 into the mixed gas flow pipes 5.

A distribution plate 8 may be installed horizontally above an upper surface of the inner drum 7. For example, the distribution plate 8 may be installed on the upper surface of the inner drum 7. The distribution plate 8 may include a plurality of openings 8a. Through the openings 8a of the distribution plate 8, the mixed gas may uniformly flow in from the inner drum 7 to the flow induction guide 3 of the mixed gas distribution system.

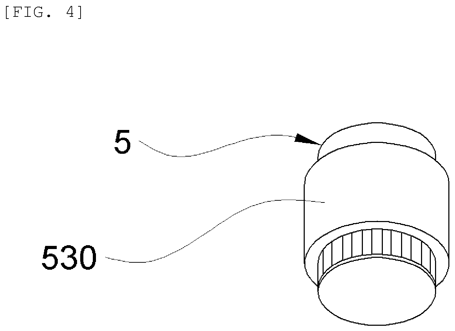

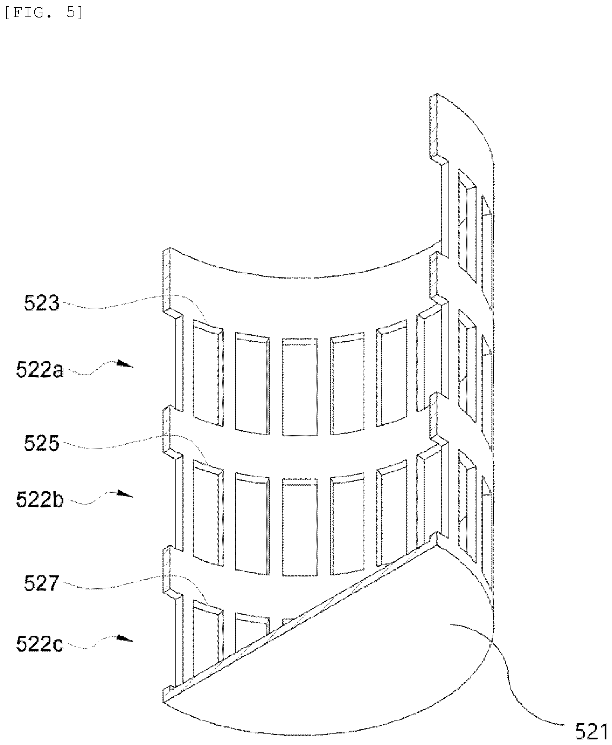

Referring to FIGS. 3 to 5, each of the mixed gas flow pipes 5 may have a bottom surface 521 and a side surface 522 (522a, 522b, 522c) connecting the bottom surface 521 with the corresponding opening 407 formed in the circumference part of the bottom surface of the upper area 4. The bottom surface 521 of the mixed gas flow pipe may be a plate without any openings.

A plurality of upper openings 523 may be formed in a side surface of an upper part 522a of the mixed gas flow pipe 5 spaced apart from each other along a circumference of the pipe 5. A plurality of middle openings 525 may be formed in a side surface of a middle part 522b of the mixed gas flow pipe 5 spaced apart from each other along the circumference of the middle part 522b of the mixed gas flow pipe 5. A plurality of lower openings 527 may be formed in a side surface of a lower part 522c of the mixed gas flow pipe 5 spaced apart from each other along the circumference of the lower part 522c of the mixed gas flow pipe 5. A flow of the mixed gas may be formed through the upper openings 523, the middle openings 525, and the lower openings 527. The mixed gas flow pipe 5 may include a cover 530 surrounding at least some regions of the side surface of the mixed gas flow pipe 5 to provide a space for a fluid flowing out of the side surface of the mixed gas flow pipe 5 after passing through the upper openings 523 to be guided toward the middle openings 525. The cover 530 may surround at least one selected from the group consisting of the upper and middle parts of the side surface of the mixed gas flow pipe 5.

The cover 530 may cause the fluid flowing out of the side surface of the mixed gas flow pipe 5 after passing through the upper openings 523 to be guided toward the middle openings 525. This configuration may form a flow in which the fluid is moved to the outside of the side surface of the mixed gas flow pipe 5 and then moved back to the inside of the side surface. Through this meander-shaped flow path, the fluids may be mixed more effectively and smoothly with each other. Better mixing is highly beneficial because it can increase the reaction rate and overall business efficiency. Better mixing can also improve catalyst utilization and reduce catalyst hot spots.

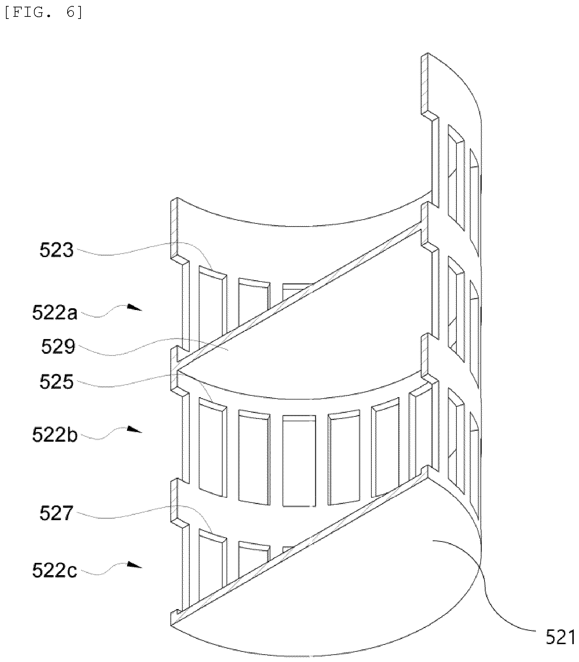

Referring to FIG. 6, the mixed gas flow pipe 5 may further include a separator plate 529 dividing the upper and middle parts of the mixed gas flow pipe 5 from each other. The separator plate 529 may completely separate the upper and middle parts of the mixed gas flow pipe 5 from each other to prevent the movement of the fluid. More specifically, the separator plate forces the fluid flow of the mixed gas which enters a mixed gas flow pipe 5 to exit the upper part of the mixed gas flow pipe 5 through the upper openings 523 into the side space created by the cover 530 and then back into the middle part of the mixed gas flow pipe 5 through the middle openings 525. Therefore, the fluid flowing into the upper part of the mixed gas flow pipe 5 may flow out through the upper openings 523 into the space between the mixed gas flow pipe 5 and the cover 530 rather than descending directly to the middle part, by the separator plate 529. The fluid in the space may then flow into the mixed gas flow pipe through the middle openings 525, descend downwards, and flow out of the mixed gas flow pipe 5 through the lower openings 527. The fluid in the lower part of the mixed gas flow pipe 5 may not exit via the bottom surface 521 of the mixed gas flow pipe 5 and is forced to exit via the lower openings 527. As described above, the fluid may form the flow in which the fluid flows out of the mixed gas flow pipe 5, flows back into the inside of the pipe, and flows out of the pipe again, thereby improving mixing efficiency of hydrogen and nitrogen, which are the ammonia synthesis raw materials, and maintaining the uniform flow rate distribution before the catalyst bed. Importantly, the mixing is accomplished passively in a consistent manner without any moving mechanical parts.

The side surface (522) may be divided into the side surface of the upper part (522a), the side surface of the middle part (522b), the side surface of the lower part (522c).

In particular, the mixed gas flow pipe 5 according to an embodiment of the present disclosure may be disposed above a catalyst bed 6. The mixed gas flow pipes 5 may be disposed above the catalyst bed, thus enabling the mixed gas passing through the mixed gas flow pipe 5 to be uniformly distributed to the catalyst bed 6. This configuration may improve an ammonia synthesis yield and extend a lifespan of the catalyst bed.

The mixed gas distribution system according to an embodiment of the present disclosure may be used for the ammonia synthesis reactor. The mixed gas distribution system may maintain the uniform flow rate distribution before the catalyst bed included in the ammonia synthesis reactor even when the flow rate of the raw material, such as hydrogen, fed into the ammonia synthesis reactor is decreased especially when the mixed gas distribution system is included in the ammonia synthesis reactor, and may achieve excellent mixing efficiency of hydrogen and nitrogen, which are the ammonia synthesis raw materials.

In an embodiment according to the present disclosure, the gas distribution device 1 may have a toroidal shape. In another embodiment according to the present disclosure, the gas distribution device 1 may have a disk shape. However, it is noted that the embodiments may not be limited in this way and generally any suitable conventional gas distribution device may also be used.

In an embodiment according to the present disclosure, the mixed gas may include at least one selected from the group consisting of hydrogen and nitrogen.

For example, hydrogen, the main raw material for the ammonia synthesis, may be produced by a water electrolyzer powered by renewable energy. One issue that needs to be addressed is that renewable energy, such as, for example, solar energy or wind energy are not constant or available at all times. Therefore, the amount of hydrogen (e.g., flow rate) provided by a process using renewable energy (e.g., solar or wind energy) may vary or fluctuate significantly and, hence, an ammonia synthesis system using such hydrogen cannot be operated at a constant flow rate. Such changes may have a negative impact on the overall efficiency of the ammonia synthesis system.

In an embodiment, hydrogen may be produced by a water electrolyzer powered using renewable energy.

Renewable energy may include at least one selected from the group consisting of solar energy, photovoltaic energy, bioenergy, wind energy, hydroelectric energy, geothermal energy, ocean energy, and waste energy. Renewable energy shows temporal variability. For example, the solar energy is unable to be used at night. Therefore, when hydrogen is produced using the device powered by renewable energy, the ammonia synthesis system is unable to be always operated at a constant flow rate. That is, there is a need for the ammonia synthesis system to cope with a change in the flow rate that occurs during a production cycle due to the temporal variability of renewable energy.

In addition, the mixed gas supplied from the mixed gas supply line 2 may be the cooling mixed gas having a low temperature. Therefore, the mixed gas supplied through the mixed gas supply line 2 may function as the cooling mixed gas, and may also function as a means of cooling the mixed gas flowing in the ammonia synthesis system. For example, the cooling mixed gas may be used as the cooling means to cool the mixed gas fed into the catalyst bed.

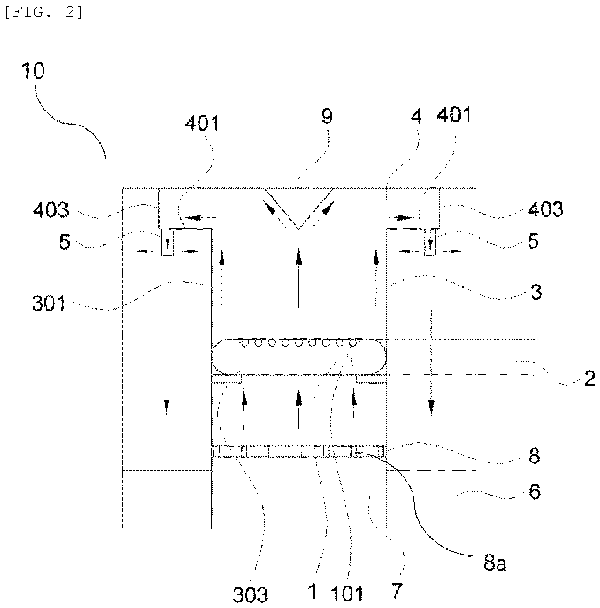

Referring to FIG. 2, the mixed gas distribution system according to an embodiment of the present disclosure may have a conical flow inducer 9 disposed at the center of the upper wall inside the reactor. The conical flow inducer 9 may function as a pre-diffuser for deflecting the mixed gas for the mixed gas entering the upper area 4 to flow smoothly toward the plurality of openings 407, prevent a dead zone from occurring in the upper area 4, and distribute the mixed gas uniformly to the plurality of openings.

In an embodiment according to the present disclosure, the mixed gas supply line 2 may include a flow regulating device. The flow regulating device may enable the flow rate of the mixed gas to be controlled independently in the mixed gas supply line 2. For example, the flow regulating device may independently regulate the flow rate of the mixed gas flowing through the mixed gas supply line 2 for the flow rate of the mixed gas entering the gas distribution device to be maintained within a desired flow rate range.

Through the flow regulating device, the mixed gas distribution system and the ammonia synthesis system comprising the mixed gas distribution system according to an embodiment of the present disclosure may cope with the change in the flow rate occurring during the production cycle, and maintain the uniform flow rate distribution before the catalyst bed included in the ammonia synthesis reactor even when the flow rate of a raw material feed, such as hydrogen, is decreased. The flow regulating device may be a flow regulating valve.

Here, in the specification, the flow rate of the raw material feed (e.g., the hydrogen and nitrogen feed, also referred to as the mixed gas flow rate.) that can be changed during the production cycle may be classified into three levels, or categories for convenience. As described above, the raw material flow rate may be classified into a low flow rate, a medium flow rate, and a high flow rate. However, the change in the flow rate may be easily regulated by the common sense or judgment of those skilled in the art. The low flow rate case indicates a case where the flow rate of the mixed gas feed flow results in an ammonia produced is less than half (50%) of an annual average production flow rate (100%), the medium flow rate case indicates a case where the flow rate is half (50%) or more and less than twice (200%) of the annual average production flow rate (100%), and the high flow rate case indicates a case where the flow rate is more than twice (200%) of the annual average production flow rate (100%), but the embodiments are not limited thereto.

The mixed gas supply line 2 may branch from one main mixed gas supply line. Alternatively, the mixed gas supply line 2 may receive at least one gas selected from the group consisting of nitrogen and hydrogen from each of individual nitrogen and hydrogen supply lines.

In addition, the embodiments of the present disclosure may provide the ammonia synthesis system comprising the mixed gas distribution system. The same description may be applied to a content of the mixed gas distribution system overlapping a content of the ammonia synthesis system.

An embodiment of the present disclosure may provide the ammonia synthesis system including an ammonia synthesis reactor; the mixed gas distribution system described above, which is included in the ammonia synthesis reactor; and one or more catalyst beds 6 disposed downstream of the mixed gas distribution system.

The ammonia synthesis system according to an embodiment of the present disclosure may maintain the uniform flow rate distribution upstream of the catalyst bed or beds included in the ammonia synthesis reactor even when the flow rate of a raw material feed, such as hydrogen, is decreased.

In addition, the ammonia synthesis system according to an embodiment of the present disclosure may achieve the excellent mixing efficiency of hydrogen and nitrogen, which are the ammonia synthesis raw materials.

The catalyst bed 6 may be installed in a toroidal area formed between the inner drum 7 and an outer side wall of the ammonia synthesis reactor 10. The mixed gas passed through the mixed gas flow pipe 5 may flow down along the outer side wall of the ammonia synthesis reactor to reach the catalyst bed 6.

In particular, the mixed gas flow pipes 5 according to an embodiment of the present disclosure may be disposed above the catalyst bed 6. The mixed gas flow pipes 5 may be disposed above the catalyst bed, thus enabling the mixed gas passed through the mixed gas flow pipes 5 to be uniformly distributed to the catalyst bed. This configuration may improve the ammonia synthesis yield and extend the lifespan of the catalyst bed.

The ammonia synthesis system according to an embodiment of the present disclosure may further include a microwave heating device. The ammonia synthesis system may further include the microwave heating device to thus enable a temperature deviation between the central and outer parts of the catalyst bed 6 to be reduced or eliminated resulting in a uniform temperature along the catalyst bed 6 at the beginning of its operation, thereby improving the ammonia synthesis yield. For example, the microwave heating device may enable the temperature deviation between the central and outer parts of the catalyst bed to be eliminated and the temperature may become uniform by emitting the microwaves to the catalyst bed 6 at the beginning of the operation. In addition, the microwave heating device may improve the ammonia synthesis yield at the beginning of the operation by preheating the catalyst bed that is not sufficiently preheated at the beginning of the operation.

One or more heating devices may be installed on each catalyst bed. For example, one, two or more, three or more, four or more, five or more, ... or eight or more microwave heating devices may be installed on each catalyst bed. It is noted, however, that the number of microwave heating devices is not limited thereto. The number of the microwave heating devices may be increased based on a size of the reactor and the catlayst beds 6 inside the reactor. Also, an installation location of the microwave heating device may be adjusted for efficient microwave emission.

The ammonia synthesis system may further include a microwave guide. There may be provided a microwave guide for each microwave device. Each microwave guide may enable the microwaves emitted by a corresponding microwave heating device to reach the catalyst bed more efficiently. The shape or installation location of the guides may be changed, amongst other considerations, based on a microwave waveform.

In an embodiment according to the present disclosure, the number of catalyst beds 6 may be one or more. In an embodiment according to the present disclosure, the number of catalyst beds 6 may be one or more, two or more, three or more, four or more, five or more, six or more, seven or more, eight or more, nine or more, ten or more, twenty or fewer, ten or fewer, nine or fewer, eight or fewer, seven or fewer, six or fewer, five or fewer, four or fewer, three or fewer, two or fewer, one or fewer, or a value between these values.

In the ammonia synthesis system according to an embodiment of the present disclosure, ammonia may be synthesized at 1 to 500 bar or 10 to 300 bar in a respective method.

In addition, in the ammonia synthesis system according to an embodiment of the present disclosure, ammonia may be synthesized at 100 to 800°C or 200 to 700°C in a respective method.

The ammonia synthesis system according to an embodiment of the present disclosure may further include a heat exchanger disposed downstream from the catalyst bed 6 to remove heat from an effluent of the catalyst bed. The heat exchanger may surround the catalyst bed or its surroundings. The ammonia synthesis system according to the present disclosure may include an additional heat removal means other than the supply of the cooling the mixed gas by further including the heat exchanger. This configuration may enable the flexible operation of the ammonia synthesis system.

As set forth above, the ammonia synthesis system according to an embodiment of the present disclosure may cope with the change in the flow rate that occurs during the production cycle.

The mixed gas distribution system and the ammonia synthesis system according to an embodiment of the present disclosure may maintain the uniform flow rate distribution before the catalyst bed included in the ammonia synthesis reactor even when the flow rate of the raw material, such as hydrogen, fed into the ammonia synthesis system is decreased.

The mixed gas distribution system and the ammonia synthesis system according to an embodiment of the present disclosure may achieve excellent mixing efficiency of hydrogen and nitrogen, which are the raw materials for synthesizing ammonia.

The ammonia synthesis system according to another embodiment of the present disclosure may improve the ammonia synthesis yield by enabling the temperature deviation between the central and outer parts of the catalyst bed to be eliminated and a uniform temperature to be obtained at the beginning of its operation.

The ammonia synthesis system according to an embodiment of the present disclosure may improve the ammonia synthesis yield at the beginning of its operation by preheating the catalyst bed at the beginning of its operation.

The ammonia synthesis system according to an embodiment of the present disclosure may synthesize ammonia in the eco-friendly manner.

The embodiments described above are only an example to which a principle of the present disclosure is applied, and may further include other embodiments or modification of the described embodiments within the scope of the present disclosure as defined in the appended claims.

## Claims

1. A mixed gas distribution system comprising:
a gas distribution device (1);
a mixed gas supply line (2) connected to the gas distribution device (1);
a flow induction guide (3);
an upper area (4); and
a plurality of mixed gas flow pipes (5) fixed to a circumference part of a bottom surface (401) of the upper area (4), and connected to a plurality of openings (407) formed in the circumference part of the bottom surface (401) to enable a movement of mixed gas,
wherein:
the gas distribution device (1) is installed horizontally,
a plurality of mixed gas distribution openings (101) are formed in an outer surface of the gas distribution device (1) for distributing the mixed gas,
the upper area (4) has the bottom surface (401) and a side surface (403) connecting the bottom surface (401) with an upper wall inside an ammonia synthesis reactor (10),
a circular opening (405) is formed in a center of the bottom surface (401) of the upper area (4),
the flow induction guide (3) has a side surface (301) connecting an upper circumference of an inner drum (7) included in the reactor with a circumference of the circular opening (405) formed in the center of the bottom surface (401) of the upper area (4),
a fixation bracket (303) is disposed on an inner surface of the flow induction guide (3), and
the gas distribution device (1) is supported by the fixation bracket (303).

2. The system according to claim 1, wherein:
the mixed gas flow pipe (5) has a bottom surface (401) and a side surface (403) connecting the bottom surface (401) with the opening (407) formed in the circumference part of the bottom surface (401) of the upper area (4),
a plurality of upper openings (523) are formed in a side surface (522) of an upper part (522a) of the mixed gas flow pipe (5) spaced apart from each other along a circumference of the upper part (522a) of the mixed gas flow pipe (5),
a plurality of middle openings (525) are formed in a side surface (522) of a middle part (522b) of the mixed gas flow pipe (5) spaced apart from each other along the circumference of the middle part (522b) of the mixed gas flow pipe (5),
a plurality of lower openings (527) are formed in a side surface (522) of a lower part of the mixed gas flow pipe (5) spaced apart from each other along the circumference of the lower part of the mixed gas flow pipe (5), and
the mixed gas flow pipe (5) includes a cover (530) surrounding at least some regions of the side surface (522) of the mixed gas flow pipe (5) to provide a space for a fluid flowing out of the side surface (522) of the mixed gas flow pipe (5) after passing through the upper opening (523) to be guided toward the middle opening (525).

3. The system according to claim 1 or 2, wherein the mixed gas flow pipe (5) further includes a separator plate (529) dividing the upper and middle parts (522b) of the mixed gas flow pipe (5) from each other.

4. The system according to one of claims 1 to 3, wherein the gas distribution device (1) has a toroidal shape.

5. The system according to one of claims 1 to 4, the mixed gas supply line (2) is adapted to supply cooling mixed gas.

6. The system according to one of claims 1 to 5, wherein a conical flow inducer (9) is disposed at a center of the upper wall inside the reactor.

7. The system according to one of claims 1 to 6, wherein the mixed gas supply line (2) includes a flow regulating device.

8. The system according to one of claims 1 to 7, wherein a distribution plate (8) is installed horizontally above an upper surface of the inner drum (7).

9. The system according to claim 8, wherein the distribution plate (8) includes a plurality of openings (8a).

10. An ammonia synthesis system comprising:
an ammonia synthesis reactor (10);
the mixed gas distribution system according to one of claims 1 to 9, which is provided in the ammonia synthesis reactor (10); and
one or more catalyst beds (6) disposed downstream from the mixed gas distribution system.

11. The ammonia synthesis system according to claim 10, further including a heat exchanger disposed downstream from the catalyst bed (6) in order to remove heat from an effluent of the catalyst bed.

12. The ammonia synthesis system according to claim 10 or 11, further including a heat exchanger surrounding the catalyst bed (9) or its surroundings.

13. A method for ammonia synthesis using an ammonia synthesis system according to one of claims 10 to 12.

14. The method for ammonia synthesis using an ammonia synthesis system according to claim 13, wherein ammonia is synthesized in the ammonia synthesis system at 10 to 300 bar, and/or at 200 to 700°C.

15. Use of a mixed gas distribution system according to one of claims 1 to 9 in an ammonia synthesis reactor (10).

## Patentansprüche

1. Mischgasverteilungssystem, umfassend:
eine Gasverteilungsvorrichtung (1);
eine Mischgaszufuhrleitung (2), die mit der Gasverteilungsvorrichtung (1) verbunden ist;
eine Strömungsinduktionsführung (3);
einen oberen Bereich (4); und
eine Vielzahl an Mischgasströmungsrohren (5), die an einem Umfangsteil einer Bodenfläche (401) des oberen Bereichs (4) befestigt sind und mit mehreren Öffnungen (407) verbunden sind, die in dem Umfangsteil der Bodenfläche (401) ausgebildet sind, um eine Bewegung von Mischgas zu ermöglichen,
wobei:
die Gasverteilungsvorrichtung (1) horizontal installiert ist,
eine Vielzahl an Mischgasverteilungsöffnungen (101) in einer Außenfläche der Gasverteilungsvorrichtung (1) zum Verteilen des Mischgases ausgebildet sind,
der obere Bereich (4) die Bodenfläche (401) und eine Seitenfläche (403) aufweist, die die Bodenfläche (401) mit einer oberen Wand innerhalb eines Ammoniaksynthesereaktors (10) verbindet,
eine kreisförmige Öffnung (405) in einer Mitte der Bodenfläche (401) des oberen Bereichs (4) ausgebildet ist,
die Strömungsinduktionsführung (3) eine Seitenfläche (301) aufweist, die einen oberen Umfang einer Innentrommel (7), die in dem Reaktor enthalten ist, mit einem Umfang der kreisförmigen Öffnung (405) verbindet, die in der Mitte der Bodenfläche (401) des oberen Bereichs (4) ausgebildet ist,
eine Befestigungshalterung (303) an einer Innenfläche der Strömungsinduktionsführung (3) angeordnet ist, und
die Gasverteilungsvorrichtung (1) durch die Befestigungshalterung (303) gelagert ist.

2. System gemäß Anspruch 1, wobei:
das Mischgasströmungsrohr (5) eine Bodenfläche (401) und eine Seitenfläche (403) aufweist, die die Bodenfläche (401) mit der Öffnung (407) verbindet, die in dem Umfangsteil der Bodenfläche (401) des oberen Bereichs (4) ausgebildet ist,
eine Vielzahl an oberen Öffnungen (523) in einer Seitenfläche (522) eines oberen Teils (522a) des Mischgasströmungsrohrs (5) ausgebildet ist, die entlang eines Umfangs des oberen Teils (522a) des Mischgasströmungsrohrs (5) voneinander beabstandet sind,
eine Vielzahl an mittleren Öffnungen (525) in einer Seitenfläche (522) eines mittleren Teils (522b) des Mischgasströmungsrohrs (5) ausgebildet ist, die entlang des Umfangs des mittleren Teils (522b) des Mischgasströmungsrohrs (5) voneinander beabstandet sind,
eine Vielzahl an unteren Öffnungen (527) in einer Seitenfläche (522) eines unteren Teils des Mischgasströmungsrohrs (5) ausgebildet ist, die entlang des Umfangs des unteren Teils des Mischgasströmungsrohrs (5) voneinander beabstandet sind, und
das Mischgasströmungsrohr (5) eine Abdeckung (530) enthält, die zumindest einige Bereiche der Seitenfläche (522) des Mischgasströmungsrohrs (5) umgibt, um einen Raum für ein Fluid bereitzustellen, das aus der Seitenfläche (522) des Mischgasströmungsrohrs (5) herausströmt, nachdem es durch die obere Öffnung (523) hindurchgegangen ist, um zu der mittleren Öffnung (525) geführt zu werden.

3. System gemäß Anspruch 1 oder 2, wobei das Mischgasströmungsrohr (5) ferner eine Trennplatte (529) enthält, die den oberen und mittleren Teil (522b) des Mischgasströmungsrohrs (5) voneinander trennt.

4. System gemäß einem der Ansprüche 1 bis 3, wobei die Gasverteilungsvorrichtung (1) eine Ringform aufweist.

5. System gemäß einem der Ansprüche 1 bis 4, wobei die Mischgaszufuhrleitung (2) dazu ausgelegt ist, Kühlmischgas zuzuführen.

6. System gemäß einem der Ansprüche 1 bis 5, wobei ein konischer Strömungsinduktor (9) in einer Mitte der oberen Wand innerhalb des Reaktors angeordnet ist.

7. System gemäß einem der Ansprüche 1 bis 6, wobei die Mischgaszufuhrleitung (2) eine Strömungsregulierungsvorrichtung enthält.

8. System gemäß einem der Ansprüche 1 bis 7, wobei eine Verteilungsplatte (8) horizontal über einer oberen Fläche der Innentrommel (7) installiert ist.

9. System gemäß Anspruch 8, wobei die Verteilungsplatte (8) eine Vielzahl an Öffnungen (8a) enthält.

10. Ammoniaksynthesesystem, umfassend:
einen Ammoniaksynthesereaktor (10);
das Mischgasverteilungssystem gemäß einem der Ansprüche 1 bis 9, das in dem Ammoniaksynthesereaktor (10) bereitgestellt ist; und
ein oder mehrere Katalysatorbetten (6), die stromabwärts von dem Mischgasverteilungssystem angeordnet sind.

11. Ammoniaksynthesesystem gemäß Anspruch 10, ferner enthaltend einen Wärmetauscher, der stromabwärts von dem Katalysatorbett (6) angeordnet ist, um Wärme von einem Abfluss des Katalysatorbetts zu entfernen.

12. Ammoniaksynthesesystem gemäß Anspruch 10 oder 11, ferner enthaltend einen Wärmetauscher, der das Katalysatorbett (9) oder seine Umgebung umgibt.

13. Verfahren zur Ammoniaksynthese unter Verwendung eines Ammoniaksynthesesystems gemäß einem der Ansprüche 10 bis 12.

14. Verfahren zur Ammoniaksynthese unter Verwendung eines Ammoniaksynthesesystems gemäß Anspruch 13, wobei Ammoniak in dem Ammoniaksynthesesystem bei 10 bis 300 bar und/oder bei 200 bis 700 °C synthetisiert wird.

15. Verwendung eines Mischgasverteilungssystems gemäß einem der Ansprüche 1 bis 9 in einem Ammoniaksynthesereaktor (10).

## Revendications

1. Système de distribution de gaz mixte comprenant :
un dispositif de distribution de gaz (1) ;
une conduite d'alimentation en gaz mixte (2) raccordée au dispositif de distribution de gaz (1) ;
un guide d'induction d'écoulement (3) ;
une zone supérieure (4) ; et
une pluralité de tuyaux d'écoulement de gaz mixte (5) fixés à une partie de circonférence d'une surface inférieure (401) de la zone supérieure (4), et raccordés à une pluralité d'ouvertures (407) formées dans la partie de circonférence de la surface inférieure (401) pour permettre un mouvement de gaz mixte,
où :
le dispositif de distribution de gaz (1) est installé horizontalement,
une pluralité d'ouvertures de distribution de gaz mixte (101) sont formées dans une surface extérieure du dispositif de distribution de gaz (1) pour distribuer le gaz mixte,
la zone supérieure (4) a la surface inférieure (401) et une surface latérale (403) raccordant la surface inférieure (401) à une paroi supérieure à l'intérieur d'un réacteur de synthèse d'ammoniac (10),
une ouverture circulaire (405) est formée dans un centre de la surface inférieure (401) de la zone supérieure (4),
le guide d'induction d'écoulement (3) a une surface latérale (301) raccordant une circonférence supérieure d'un tambour interne (7) inclus dans le réacteur à une circonférence de l'ouverture circulaire (405) formée dans le centre de la surface inférieure (401) de la zone supérieure (4),
un support de fixation (303) est disposé sur une surface interne du guide d'induction d'écoulement (3), et
le dispositif de distribution de gaz (1) est supporté par le support de fixation (303).

2. Système selon la revendication 1, où :
le tuyau d'écoulement de gaz mixte (5) a une surface inférieure (401) et une surface latérale (403) raccordant la surface inférieure (401) à l'ouverture (407) formée dans la partie de circonférence de la surface inférieure (401) de la zone supérieure (4),
une pluralité d'ouvertures supérieures (523) sont formées dans une surface latérale (522) d'une partie supérieure (522a) du tuyau d'écoulement de gaz mixte (5) espacées les unes des autres le long d'une circonférence de la partie supérieure (522a) du tuyau d'écoulement de gaz mixte (5),
une pluralité d'ouvertures médianes (525) sont formées dans une surface latérale (522) d'une partie médiane (522b) du tuyau d'écoulement de gaz mixte (5) espacées les unes des autres le long de la circonférence de la partie médiane (522b) du tuyau d'écoulement de gaz mixte (5),
une pluralité d'ouvertures inférieures (527) sont formées dans une surface latérale (522) d'une partie inférieure du tuyau d'écoulement de gaz mixte (5) espacées les unes des autres le long de la circonférence de la partie inférieure du tuyau d'écoulement de gaz mixte (5), et
le tuyau d'écoulement de gaz mixte (5) inclut un couvercle (530) entourant au moins certaines régions de la surface latérale (522) du tuyau d'écoulement de gaz mixte (5) pour fournir un espace pour qu'un fluide s'écoulant hors de la surface latérale (522) du tuyau d'écoulement de gaz mixte (5) après avoir traversé l'ouverture supérieure (523) soit guidé vers l'ouverture médiane (525).

3. Système selon la revendication 1 ou 2, où le tuyau d'écoulement de gaz mixte (5) inclut en outre une plaque de séparation (529) séparant les parties supérieure et médiane (522b) du tuyau d'écoulement de gaz mixte (5) l'une de l'autre.

4. Système selon l'une des revendications 1 à 3, où le dispositif de distribution de gaz (1) a une forme toroïdale.

5. Système selon l'une des revendications 1 à 4, où la conduite d'alimentation en gaz mixte (2) est adaptée pour fournir un gaz mixte de refroidissement.

6. Système selon l'une des revendications 1 à 5, où un inducteur d'écoulement conique (9) est disposé au niveau d'un centre de la paroi supérieure à l'intérieur du réacteur.

7. Système selon l'une des revendications 1 à 6, où la conduite d'alimentation en gaz mixte (2) inclut un dispositif de régulation d'écoulement.

8. Système selon l'une des revendications 1 à 7, où une plaque de distribution (8) est installée horizontalement au-dessus d'une surface supérieure du tambour interne (7).

9. Système selon la revendication 8, où la plaque de distribution (8) inclut une pluralité d'ouvertures (8a).

10. Système de synthèse d'ammoniac comprenant :
un réacteur de synthèse d'ammoniac (10) ;
le système de distribution de gaz mixte selon l'une des revendications 1 à 9, qui est prévu dans le réacteur de synthèse d'ammoniac (10) ; et
un ou plusieurs lits de catalyseur (6) disposés en aval du système de distribution de gaz mixte.

11. Système de synthèse d'ammoniac selon la revendication 10, incluant en outre un échangeur de chaleur disposé en aval du lit de catalyseur (6) afin d'éliminer la chaleur d'un effluent du lit de catalyseur.

12. Système de synthèse d'ammoniac selon la revendication 10 ou 11, incluant en outre un échangeur de chaleur entourant le lit de catalyseur (9) ou son environnement.

13. Procédé de synthèse d'ammoniac utilisant un système de synthèse d'ammoniac selon l'une des revendications 10 à 12.

14. Procédé de synthèse d'ammoniac utilisant un système de synthèse d'ammoniac selon la revendication 13, dans lequel l'ammoniac est synthétisé dans le système de synthèse d'ammoniac à 10 à 300 bars, et/ou à 200 à 700 bars.

15. Utilisation d'un système de distribution de gaz mixte selon l'une des revendications 1 à 9 dans un réacteur de synthèse d'ammoniac (10).
